# EUROPEAN PATENT APPLICATION

(11) **EP 1 004 787 A2**
(43) Date of publication of application: **31.05.2000**
(21) Application number: 99309321.0
(22) Date of filing: 23.11.1999
(51) Int. Cl.: F16D 59/02, F16D 55/28, F16D 65/12

(54) **Noise reduction devices for a brake**

(30) Priority: 24.11.1998 US 198757
(71) Applicant: DANA CORPORATION, Toledo, OH 43606 (US)
(72) Inventor: Booth, Dwight E., Milton, Wisconsin 53563 (US); Hitchens, Cheryl S., South Beloit, Illinois 61080 (US); Lankford, George L., Beloit, Wisconsin 53511 (US); Nelson, Dennis J., Rockford, Illinois 61103 (US); Heim, James M., Rockford, Illinois 61114 (US); Kruger, Steven A., Roscoe, Illinois 61073 (US); Larson, Paul A., Belvidere, Illinois 61008 (US)
(74) Representative: Cheyne, John Robert Alexander Mackenzie

(57) **Abstract**

A brake having improved noise reduction and vibration characteristics is provided. The brake includes an adhesive tape (52) or other sound reduction material disposed about the radially outer periphery of one or more of the components of the brake. The brake further includes a sound reducing hub (54,56) disposed about the inner periphery of a friction plate (34,36) in the brake. The hub (54,56) includes a plurality of leaf springs (80,80') that allow the hub (54,56) and friction plate (34,36) to maintain sufficient contact with the drive shaft or drive hub for rotation therewith, yet also allow the hub (54,56) and friction plate (34,36) to move axially upon disengagement of the brake for quiet disangagement of the plates (34,36).

## Description

### BACKGROUND OF THE INVENTION

### 1. Field of the Invention

This invention relates to a selectively engageable and disengageable unit such as a brake or clutch and, in particular, to a unit including a sound reduction material disposed about the component parts of the unit and a flexible hub disposed on one or more of the engagement components of the unit in order to reduce noise and vibration within the unit.

### 2. Disclosure of Related Art

A conventional selective engagement/disengagement unit such as a disc brake is generally mounted to a drive shaft extending along a longitudinal axis or to a drive hub disposed about the drive shaft. The unit may include a plurality of friction plates disposed radially outwardly of the drive shaft and configured to rotate with the drive shaft. The unit may also include a plurality of non-rotating, axially movable plates disposed radially outwardly of the drive shaft and interleaved with the friction plates. The unit may further include an armature centered about the longitudinal axis and axially movable for selective engagement with, and disengagement from, the above-mentioned plates. The armature may be urged in a first axial direction and into frictional engagement with the plates by one or more springs. The armature may be urged in a second axial direction in order to release the plates by a magnetic circuit created by energizing a field coil disposed within a field shell.

Although such conventional units function well for their intended purpose, they suffer from undesirable levels of noise and vibration during engagement and disengagement of the component parts of the units and during normal running operation of the unit--rendering them particularly undesirable in certain applications (e.g., for use on a wheelchair). One conventional means for reducing noise in such units is the use of a rigid housing or enclosure disposed about the components of the unit. Such housings, however, are relatively expensive and consume a relatively large amount of space and relatively large amounts of design, manufacturing, and assembly time.

There is thus a need for a selectively engageable and disengageable unit that will minimize or eliminate one or more of the above-mentioned deficiencies.

### SUMMARY OF THE INVENTION

The present invention provides a selectively engageable and disengageable unit such as a brake.

An object of the present invention is to provide a selectively engageable and disengageable unit that generates less noise and vibration as compared to conventional units.

In accordance with the present invention, a selectively engageable and disengageable unit includes first, second, and third plates centered about a first axis. The first plate may comprise an axially movable armature. The second plate may comprise a conventional friction plate configured to rotate with a drive shaft or drive hub. The third plate may be fixed against rotation relative to the second plate and may be axially spaced from the first plate by the second plate. The unit may further include means, such as one or more springs, for urging the first plate in a first axial direction to thereby cause the frictional engagement of the first, second, and third plates. The unit may also include means for urging the first plate in a second axial direction to thereby cause the disengagement of the first, second, and third plates. The latter urging means may include a field shell disposed on a side of the first plate opposite the second and third plates, a field coil disposed within the field shell, and means for energizing the field coil. Finally, the unit may include a sound reduction material, such as an adhesive tape or an elastic band, disposed radially outwardly of the first and third plates.

The use of a sound reduction material such as an adhesive tape wrapped about the components of the unit reduces both vibration and noise during engagement and disengagement of the friction plates of the unit and during normal running operation of the unit while still flexing to allow the units to move axially for proper engagement/disengagement. The use of such a sound reduction material also provides many other advantages. The material shields the components of the unit from foreign elements that might corrode, contaminate or otherwise damage the unit. The material also prevents particle ejection from the unit that might damage other devices near the unit. The material also helps to keep the friction plates in alignment. Finally, use of the material is less costly than conventional noise reduction devices and methods, consumes less space, and requires less design, manufacturing, and assembly time to implement.

In accordance with the present invention, a selectively engageable and disengageable unit may further include a hub disposed about a radially inner portion of the second plate. The hub is made from a resilient material such as plastic and is designed to reduce noise and vibration resulting from engagement and disengagement of the plates within the unit and from normal running operation of the unit. The walls of the hub define at least one leaf spring near the radially inner periphery of the hub. The leaf springs deform to allow sufficient axial movement of the second plate during disengagement of the unit, yet maintain sufficient pressure against the drive hub and/or drive shaft to transfer torque between the second plate and drive shaft and/or hub and to prevent rattling among the plates.

These and other features and objects of this invention will become apparent to one skilled in the art from the following detailed description and the accompanying drawings illustrating features of this invention by way of example.

### BRIEF DESCRIPTION OF THE DRAWINGS

Figure 1 is a front plan view of a unit in accordance with the present invention.

Figure 2 is a fragmentary cross-sectional view of the unit of Figure 1 taken substantially along lines 2-2.

Figure 3 is a fragmentary cross-sectional view of the unit of Figure 1 taken substantially along lines 3-3.

Figure 4 is a rear plan view of a unit in accordance with the present invention.

Figure 5 is a partial cross-sectional view of the friction plate and hub components of the unit of Figures 1-4.

Figures 6-8 are cross-sectional views of alternate embodiments of a spacer component of the unit of Figures 1-4.

Figure 9 is a plan view of a first alternate embodiment of the hub component of the unit of Figures 1-4.

Figure 10 is a plan view of a second alternate embodiment of the hub component of the unit of Figures 1-4.

Figure 11 is an enlarged plan view of a portion of the hub embodiment of Figure 10.

Figure 12 is a plan view of a third alternate embodiment of the hub component of the unit of Figures 1-4.

Figure 13 is a plan-view of a fourth alternate embodiment of the hub component of the unit of Figures 1-4.

### DETAILED DESCRIPTION OF THE PREFERRED EMBODIMENT

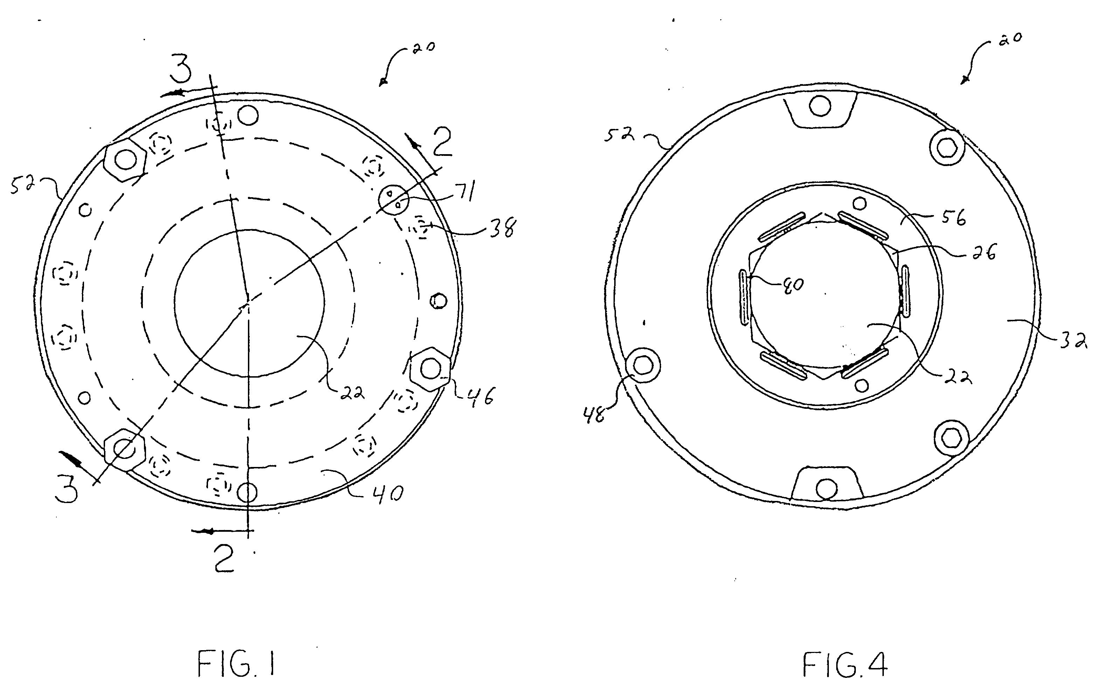

Referring now to the drawings wherein like reference numerals are used to identify identical components in the various views, Figures 1-4 illustrate a selectively engageable and disengageable unit 20 in accordance with the present invention. In the illustrated embodiment unit 20 comprises a brake. It should be understood, however, that the noise reduction devices disclosed herein could also be applied to other engagement/disengagement units including a clutch. Unit 20 is configured to be disposed radially outwardly of a drive shaft 22 that is centered about a longitudinal axis 24. Shaft 22 may include a drive hub 26 mounted thereto on which unit 20 may be mounted.

Unit 20 includes a plurality of plates such as armature 28, middle plate 30, end plate 32, and friction plates 34, 36 that are selectively, frictionally engaged and disengaged to prevent and allow, respectively, the rotation of shaft 22 and hub 26. Unit 20 may also include means, such as a spring or springs 38, for urging armature 28 in a first axial direction towards plates 30, 32, 34, 36 and means, such as field shell 40, field coil 42, and coil energizing means 44, for urging armature 28 in a second axial direction away from plates 30, 32, 34, 36. Unit 20 may further include drive pins 46, nuts 48, and spacers 50. In accordance with the present invention, unit 20 may also include a sound reduction material 52 disposed radially outwardly of the components of unit 20 and sound reduction hubs 54, 56 disposed about the radially inner periphery of friction plates 34, 36, respectively.

Armature 28 is provided to cause the selective, frictional engagement and disengagement of middle plate 30, end plate 32, and friction plates 34, 36. Armature 28 is conventional in the art and may be made from a variety of conventional materials. In a constructed embodiment, armature 28 is made from steel. Armature 28 is annular and is centered about axis 24. Armature 28 may include one or more axially extending channels 58. Channels 58 are configured to receive drive pins 46 and may be disposed about the radially outer periphery of armature 28.

Middle plate 30 and end plate 32 are provided for selective frictional engagement with friction plates 34, 36 in order to prevent rotation of plates 34, 36 and shaft 22. Plates 30, 32 are conventional in the art and may be made from a variety of conventional materials. In a constructed embodiment, plates 30, 32 are made from steel. Plates 30, 32 are annular and are centered about axis 24. Like armature 28, middle plate 30 may include one or more axially extending channels 60 disposed about the radially outer periphery of plate 30 and configured to receive drive pins 46. End plate 32 may include one or more axially extending apertures 62 configured to receive drive pins 46.

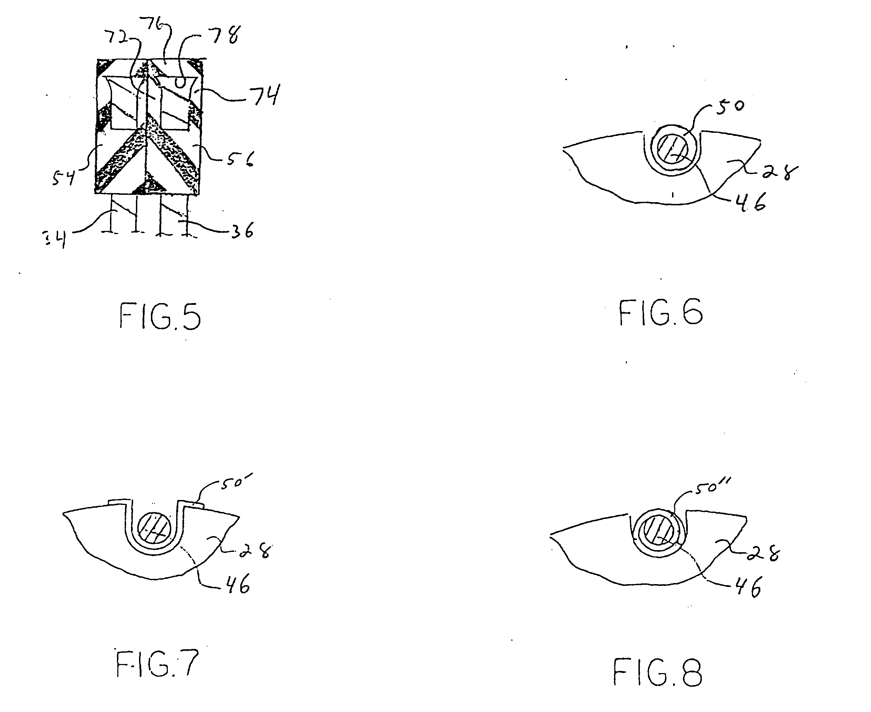

Friction plates 34, 36 are provided to transmit a braking torque to drive shaft 22 upon the frictional engagement of armature 28 and plates 30, 32, 34, 36. Plates 34, 36 are conventional in the art and may be made from a variety of conventional materials. In a constructed embodiment, plates 34, 36 are made from nickel plated stainless steel. Plates 34, 36 are annular and are centered about axis 24. Plates 34, 36 may be secured to drive hub 26 for rotation with drive hub 26 and drive shaft 22 by hubs 54, 56, respectively, as described in greater detail hereinbelow. Referring to Figure 5, plates 34, 36 may also be mushroomed within hubs 54, 56 to better carry the load. The radially inner peripheries of plates 34, 36 are shaped such that plates 34, 36, will continue to rotate with shaft 22 and drive hub 26 should hubs 54, 56 fail.

Springs 38 are provided to urge or bias armature 28 in a first axial direction towards plates 30, 32, 34, 36. Springs 38 are conventional in the art and may be made from a variety of conventional materials. In a constructed embodiment, springs 38 are made from stainless steel. Springs 38 are disposed within bores 64 in field shell 40 and may be arranged to optimally reduce noise and vibration within unit 20 and to optimize torque transmission within unit 20. Referring to Figure 1, in the illustrated embodiment springs 38 are arranged asymmetrically in a circle about axis 24. It should be understood, however, that springs 38 may be arranged in a variety of ways depending upon the specifications of the unit 20. It should also be understood that a single spring (e.g., a wave spring) could be used in place of springs 38. The spring constants of springs 38 may also be varied to further optimize noise and vibration reductions, and torque transmission, within unit 20.

Field shell 40 is provided to house field coil 42 and to form part of a magnetic circuit that selectively urges armature 28 in a second axial direction away from plates 30, 32, 34, 36 in order to disengage unit 20. Field shell 40 is conventional in the art and may be made from a variety of conventional ferromagnetic materials. Shell 40 is annular, may be centered about axis 24, and may include radially inner and outer poles rings 66, 68 or pole segments that extend axially along axis 24. Shell 40 may also include a plurality of bores 64 configured to receive springs 38 and through bores 70 configured to receive drive pins 46. In a constructed embodiment, the axial length of bores 64 is equal to the axial length of pole 66, 68 for ease of manufacture.

Field coil 42 is provided to create a magnetic circuit between field shell 40 and armature 28 in order to selectively urge armature 28 in a second axial direction away from plates 30, 32, 34, 36 to disengage unit 20. Field coil 42 is conventional in the art. Coil 42 is disposed within field shell 40, radially outwardly of inner pole ring 66 and radially inwardly of outer pole ring 68.

Energizing means 44 are provided to generate a current within field coil 42. Energizing means 44 are conventional in the art and may comprise a pair of lead wires extending from coil 42, through a bushing 71 housed in field shell 40, to a conventional power source such as a battery (not shown).

It should be understood that springs 38, and the combination of field shell 40, field coil 42, and energizing means 44, are only exemplary means for urging armature 28 along axis 24. Alterative urging means are well known in the art including hydraulic or pneumatically actuated pistons and bladders.

Drive pins 46 and nuts 48 are provided to secure and align the component parts of unit 20. Pins 46 and nuts 48 are conventional in the art and may be made from a variety of conventional materials. In a constructed embodiment, pins 46 and nuts 48 are made from a steel alloy. Alternatively, drive pins 46 may be made from a relatively soft material designed to further reduce noise resulting from the interaction of pins 46 and plates 28, 30, 32. Pins 46 extend through bores 70 in field shell 40, channels 58, 60 in armature 28 and middle plate 30, respectively, and apertures 62 in end plate 32. Drive pins 46 may be arranged in a variety of ways to optimally reduce noise and vibration within unit 20. Referring to Figure 1, in the illustrated embodiment pins 46 are arranged asymmetrically in a circle about axis 24.

Spacers 50 are provided to maintain the axial alignment of the components of unit 20 and to reduce noise and vibration resulting from contact between plates 28, 30 and drive pins 46. Spacers 50 may be made from a variety of conventional materials and, in a constructed embodiment, are made from carbon steel. Referring to Figure 6, in a constructed embodiment, each spacer 50 comprises a molded insert sleeve. Referring now to Figure 7, in an alternative embodiment, the spacer may alternately comprise a substantially U-shaped insert 50' disposed within channels 58, 60 of armature 28 and middle plate 30, respectively. Referring now to Figure 8, in yet another alternative embodiment, the spacer may comprise a spring coil 50" wrapped about each of drive pins 46. For reasons set forth hereinbelow, the radial distance of from axis 24 to the radially outer perimeter of spacer 50 may differ from the radial distances from axis 24 to the radially outer perimeters of armature 28 and middle plate 30.

Sound reduction material 52 is provided to reduce the noise and vibration generated by unit 20 upon engagement and disengagement of plates 28, 30, 32, 34, 36 and upon regular running operation of unit 20. Sound reduction material 52 is disposed radially outwardly of, and applied directly to, the components of unit 20. In the illustrated embodiment, material 52 is disposed about the radially outer perimeters of field shell 40, armature 28, middle plate 30, and end plate 32. Material 52 reduces noise and vibration within unit 20 while still flexing or crinkling to allow the axial movement of armature 28 and plates 30, 32 during engagement and disengagement of unit 20.

In a constructed embodiment, material 52 comprises an adhesive tape. Material 52 may be wound at least one time about field shell 40, armature 28, and middle plate 30 and then crossed over and wound at least once about armature 28, middle plate 30, and end plate 32. It should be understood, however, that the manner in which material 52 is applied, the axial width or radial thickness of material 52, and the composition of material 52 may all vary. For example, material 52 may be wound about unit 20 or may be applied in a series of axial or angular strips. With respect to composition, material 52 may comprise paper, plastic, glass, or cloth tapes. Material 52 may also comprise an elastic band (e.g., an O-ring) with or without the use of an adhesive. Further, whether used with tapes or an elastic band, any adhesive that is applied may be applied either prior to wrapping material 52 or may form part of material 52. A variety of adhesives may be used including acrylic or silicone adhesives. The adhesion of material 52 may also be varied by varying tension in material 52 as it is wound about unit 20 and by varying the radial distances of the components to which material 52 adheres. For example, the radially outer perimeters of plates 28, 30, 32 may be varied as well as the radially outer distance of spacers 50 relative to plates 28, 30, 32.

Material 52 may also be applied in a variety of ways. Material 52 may be repeatedly wrapped by machine or by hand, may be shrink-wrapped, may be molded onto unit 20, or may be sprayed onto unit 20 depending upon the composition of material 52. Unit 20 may even be immersed in material 52 depending upon the composition of material 52.

The use of sound reduction material 52 in unit 20 represents an improvement over conventional units 20 because material 52 reduces the operating noise and vibration of unit 20 during engagement and disengagement of plates 28, 30, 32, 34, 36 and during normal running operation of unit 20. Material 52 also reduces the noise generated by the interaction of plates 28, 30 and spacers 50 by securing the location of spacers 50 relative to plates 28, 30. Further, material 52 controls the movement characteristics and rate of acceleration during engagement and disengagement of unit 20 and reduces radial, axial, and angular flutter during normal running of unit 20. Material 52 accomplishes these objectives while still remaining flexible enough to permit the appropriate axial movement of plates 28, 30, 32 during engagement and disengagement of unit 20.

In addition to noise reduction, material 52 provides several other advantages. Material 52 shields the components of unit 20 from foreign objects and elements that may corrode, contaminate, or otherwise damage unit 20. Material 52 also protects devices proximate to unit 20 from particles that may be ejected from unit 20 during the gradual wear or breakdown of unit 20. Material 52 also maintains the alignment of plates 28, 30, 32 and may even be sufficiently strong to eliminate drive pins 46. Finally, material 52 represents a relatively inexpensive means of accomplishing the aforementioned objectives and advantages as compared to conventional sound reduction devices and methods and consumes less space and assembly time.

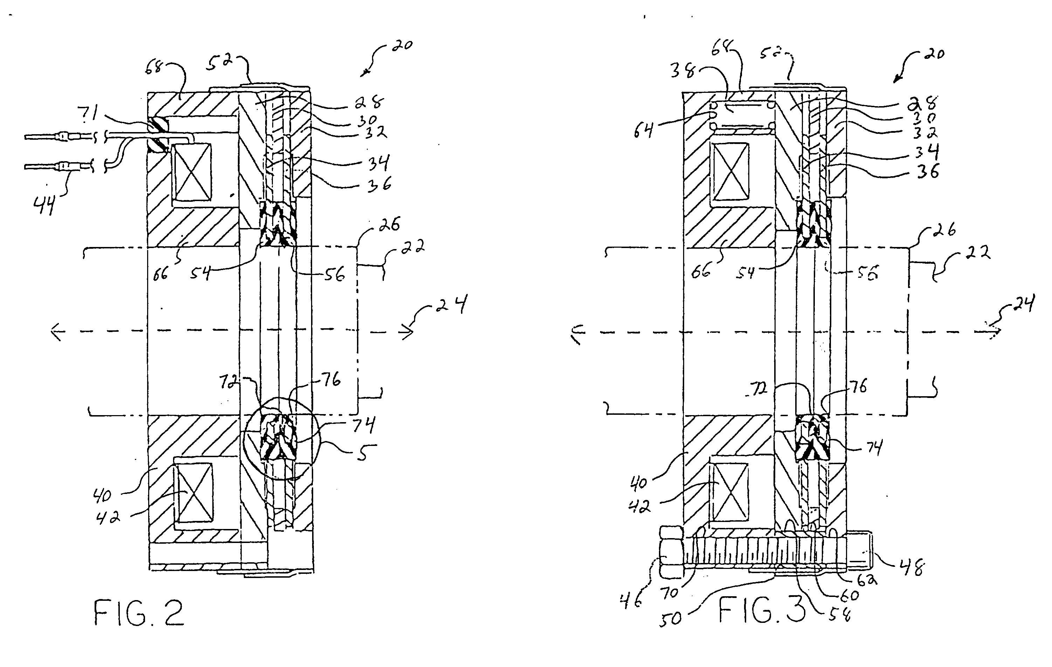

Hubs 54, 56 are also provided to reduce the noise and vibration in unit 20 during engagement and disengagement of plates 28, 30, 32, 34, 36 within unit 20 and during normal running operation of unit 20. Hubs 54, 56 may be made from a variety of materials including polyurethane and rubber and, in a constructed embodiment, are made from a plastic. Referring to Figures 2-5, hub 56 will be described in greater detail. It should be understood that hub 54 may be similar in construction to hub 56 (although the construction of hub 54 may also vary in accordance with alternative embodiments for hubs 54, 56 as set forth hereinbelow).

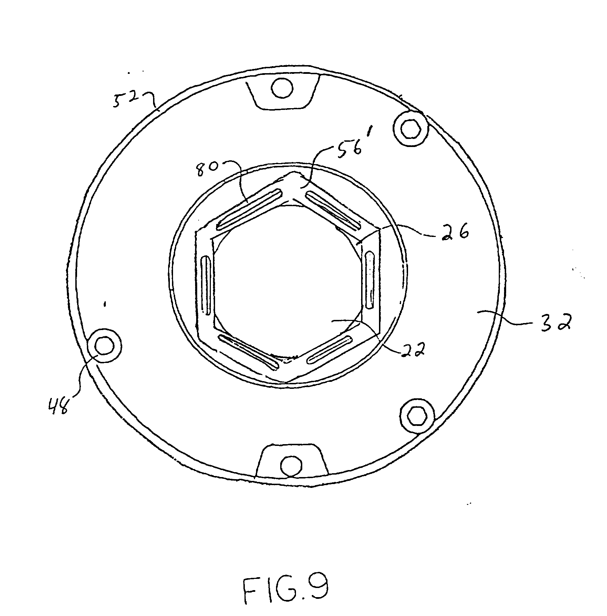

Hub 56 may include first, second, and third walls 72, 74, 76. Walls 72, 74 extend radially while wall 76 extends axially to connect walls 72, 74. Walls 72, 74 define an opening 78 (best shown in Figure 5) that is configured to receive friction plate 36. Referring to Figure 9, in an alternative embodiment, a hub 56' may be constructed in which walls 72, 74, 76 define an opening that is configured to receive drive hub 26. In the illustrated embodiment, the inner periphery of hubs 56 and 56' are substantially hexagonal. It should be understood, however, that the shape of hubs 56 and 56' will vary depending upon the shape of drive hub 26 and/or drive shaft 22 and that the inventive concept disclosed herein could be utilized with any polygonal drive hub, for example, and with hubs and/or shafts having spline configurations.

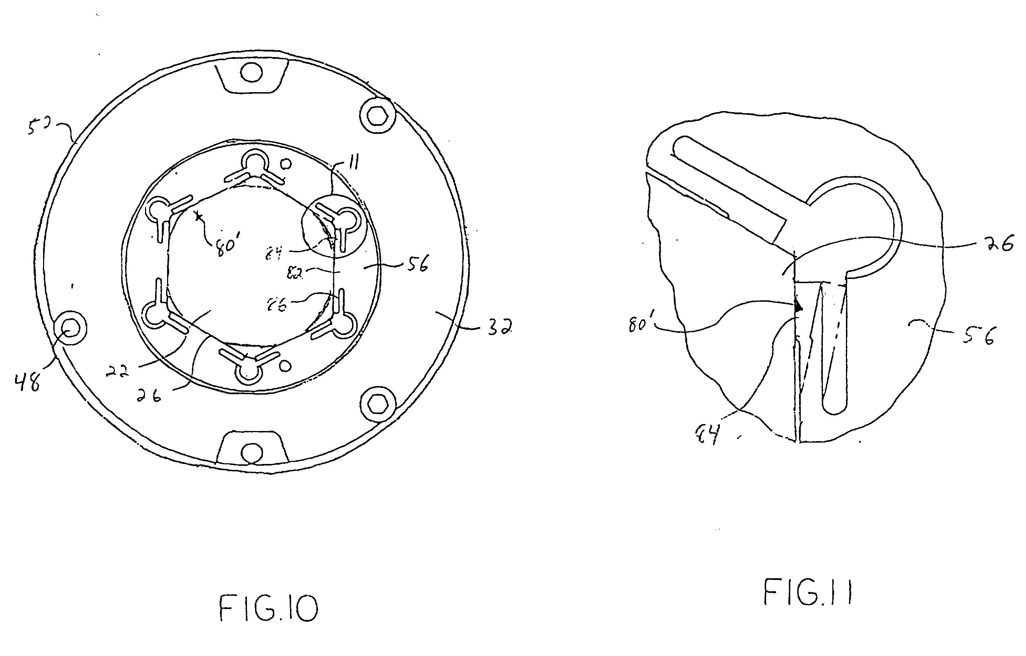

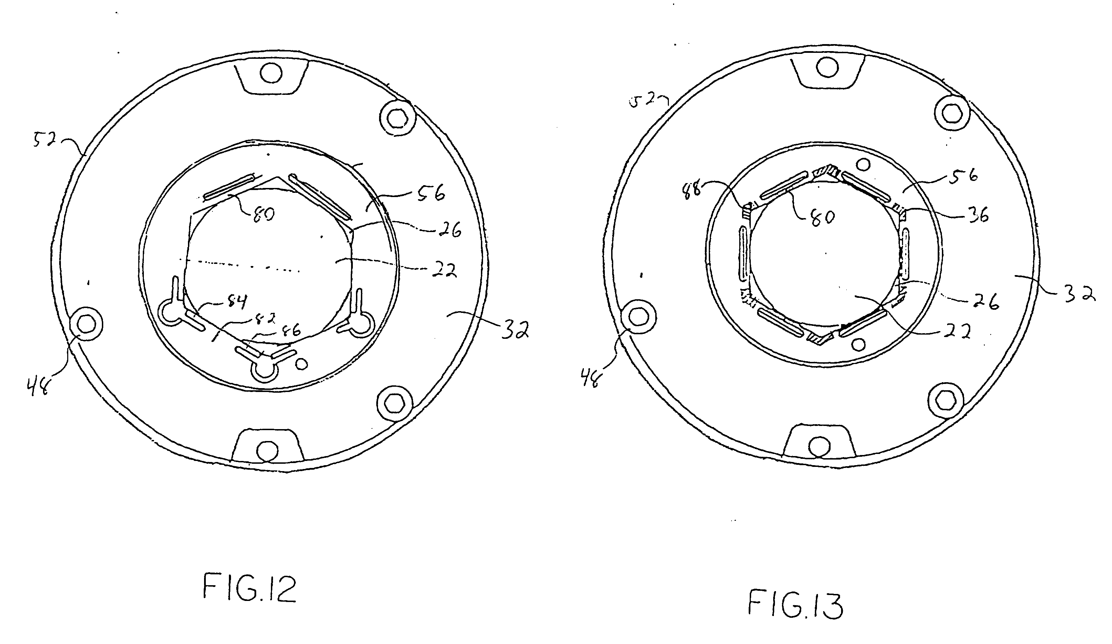

Referring again to Figure 4, walls 72, 74, 76 also define at least one leaf spring 80. In the embodiment illustrated in Figure 4, leaf spring 80 is defined by forming axially aligned apertures in each of first and second walls 72, 74 near the radially inner periphery of hub 56. In an alternative embodiment shown in Figures 10 and 11, walls 72, 74, 76 define a radially inwardly extending projection 82 having first and second arms 84, 86. Each of the arms forms a leaf spring 80'. In the embodiment illustrated in Figures 10 and 11, projection 82 is symmetrical about a radially extending line bisecting projection 82. It should be understood, however, that projection 82 may be asymmetrical so as to vary the length of arms 84, 86 and, therefore, the spring constants of the leaf springs 80'. Arms 84, 86 may also be made from different materials to further vary the spring constants of the leaf springs 80'. Further as shown in Figure 12, walls 72, 74, 76 of any individual hub 56 may define multiple forms or embodiments of leaf springs 80 (e.g., leaf springs 80, 80').

Leaf springs 80 are provided to maintain the relationship between friction plates 34, 36 and drive hub 26 while allowing plates 34, 36 to move axially during engagement and disengagement of plates 34, 36 within unit 20. Leaf springs 80 compress to maintain sufficient pressure against hub 26 to prevent plate rattle and to transfer torque between hub 26 and plates 34, 36, but elastically deform under relatively high torque loads to allow plates 34, 36 to move axially and disengage from plates 28, 30, 32. The material of hub 56 (e.g., plastic) allows leaf spring 80 to seek its own proper tension. Torque is carried at the corners of hub 56 and, as shown in Figure 13, apertures 88 may be formed within walls 72, 74, 76 of hub 56 to expose friction plate 36 and improve torque transfer between plate 36 and drive hub 26.

While the invention has been particularly shown and described with reference to the preferred embodiments thereof, it is well understood by those skilled in the art that various changes and modifications can be made in the invention without departing from the spirit and scope of the invention.

## Claims

1. A selectively engageable and disengageable unit, comprising:
first, second and third plates (28, 34, 30) centered about a first axis, said second plate disposed between said first and third plates and rotatable relative to said first axis, said first and third plates fixed against rotation about said first axis;
means for urging said first plate in a first axial direction to thereby cause frictional engagement of said first, second, and third plates;
means for urging said first plate in a second axial direction to thereby cause disengagement of said first, second, and third plates; and,
a sound reduction material disposed radially outwardly of, and applied directly to, a portion of said first plate and a portion of said third plate.

2. A selectively engageable and disengageable unit, comprising:
an armature (28) centered about a first axis;
first and second plates (34, 30) centered about said first axis and disposed on a first side of said armature, said first plate rotatable relative to said first axis and said second plate fixed against rotation relative to said first plate, said second plate axially spaced from said armature by said first plate;
a field shell disposed on a second side of said armature;
a field coil disposed within said field shell;
a spring disposed between said field shell and said armature that urge said armature in a first axial direction to thereby cause frictional engagement of said armature and said first and second plates;
means for energizing said field coil to thereby urge said armature in a second axial direction and cause disengagement of said armature and said first and second plates; and,
a sound reduction material disposed radially outwardly of, and applied directly to, a portion of said armature and a portion of said second plate.

3. A unit as claimed in claim 1 or 2, further comprising a spacer disposed within a channel in said first plate/armature (28) wherein a first radial distance from said first axis to a radially outer perimeter of said spacer differs from a second radial distance from said first axis to a radially outer perimeter of said first plate/armature (28) .

4. A unit as claimed in any one of the preceding claims, wherein a first radial distance from said first axis to a radially outer perimeter of said first plate/armature (28) differs from a second radial distance from said first axis to a radially outer perimeter of said third plate/second plate (30).

5. A unit as claimed in any one of the preceding claims, wherein said sound reduction material comprises an adhesive tape.

6. A unit as claimed in any one of the preceding claims, wherein said sound reduction material comprises an elastic band.

7. A hub for reducing noise in selectively engageable and disengageable unit, said hub centered about a first axis and comprising:
first, second, and third walls, said first and second walls extending radially and said third wall extending axially to connect said first and second walls,
wherein said first, second, and third walls define an opening configured to receive one of a friction plate and a drive hub and said first, second, and third walls further define a first leaf spring.

8. A hub as claimed in claim 7, wherein said first and second walls have axially aligned apertures extending therethrough to thereby define said first leaf spring.

9. A hub as claimed in claim 7 or 8, wherein first, second, and third walls define a radially extending projection having first and second arms, said first arm defining said first leaf spring.

10. A hub as claimed in any one of claims 7 to 9, wherein said first, second, and third walls define a second leaf spring.

11. A hub as claimed in claim 10, wherein said first leaf spring is different than said second leaf spring.

12. A hub as claimed in any one of claims 7 to 11, wherein said third wall includes an aperture whereby said one of a friction plate and a drive hub is exposed.

13. A selectively engageable and disengageable unit, comprising:
first, second, and third plates (28, 34, 30) centered about a first axis, said second plate disposed between said first and third plates and rotatable relative to said first axis, said first and third plates fixed against rotation about said first axis;
means for urging said first plate in a first axial direction to thereby cause frictional engagement of said first, second, and third plates;
means for urging said first plate in a second axial direction to thereby cause disengagement of said first, second, and third plates; and,
a hub disposed about a radially inner portion of said second plate.

14. A unit as claimed in claim 13, wherein the hub is in accordance with any one of claims 7 to 13.

15. A unit as claimed in claim 13, wherein said hub includes an aperture whereby a radially inner portion of said second plate is exposed.

16. A unit as claimed in claim 13, wherein said second plate is mushroomed within said hub.

17. A selectively engageable and disengageable unit, comprising:
first, second, and third plates (28, 34, 30) centered about a first axis, said second plate disposed between said first and third plates and rotatable relative to said first axis, said first and third plates fixed against rotation about said first axis;
means for urging said first plate in a first axial direction to thereby cause frictional engagement of said first, second, and third plates;
means for urging said first plate in a second axial direction to thereby cause disengagement of said first, second, and third plates;
a sound reduction material disposed radially outwardly of, and applied directly to, a portion of said first plate and a portion of said third plate; and,
a hub disposed about a radially inner portion of said second plate.
